# EUROPÄISCHE PATENTSCHRIFT

(11) **EP 3 372 943 B1**
(45) Veröffentlichungstag und Bekanntmachung des Hinweises auf die Patenterteilung: **28.04.2021**
(21) Anmeldenummer: 18160520.5
(22) Anmeldetag: 07.03.2018
(51) Int. Cl.: F41A 3/66, F41A 3/26, F41A 21/48, F41C 23/16, F41C 23/20, F41G 11/00

(54) **WAFFENGEHÄUSE UND DAMIT AUSGESTATTETE SELBSTLADE-FEUERWAFFE SOWIE EIN VERFAHREN ZUR HERSTELLUNG EINES WAFFENGEHÄUSES**
WEAPON HOUSING AND SELF-LOADING FIREARM WITH SAME AND A METHOD FOR MANUFACTURING A WEAPON HOUSING
CARCASSE DE L'ARME ET ARMES À FEU À CHARGEMENT AUTOMATIQUE ÉQUIPÉE DE LADITE CARCASSE DE L'ARME ET PROCÉDÉ DE FABRICATION D'UNE CARCASSE DE L'ARME

(30) Priorität: 07.03.2017 DE 102017002242
(43) Veröffentlichungstag der Anmeldung: 12.09.2018
(73) Patentinhaber: Heckler & Koch GmbH, 78727 Oberndorf/Neckar (DE)
(72) Erfinder: Doll, Stefan, 78727 Oberndorf (DE); Fischbach, Wilhelm, 78652 Deißlingen (DE); Kohler, Daniel, 78727 Oberndorf (DE); Roth, Marc, 78727 Oberndorf (DE)
(74) Vertreter: Samson & Partner Patentanwälte mbB

(56) Entgegenhaltungen:
- US-A1- 2009 000 173
- US-A1- 2014 076 146
- US-A1- 2017 067 715

## Beschreibung

### Gebiet der Erfindung

Die vorliegende Erfindung betrifft ein Waffengehäuse gemäß dem Oberbegriff des Anspruchs 1.

Die Erfindung betrifft auch eine mit einem derartigen Waffengehäuse ausgestattete Selbstladefeuerwaffe sowie ein Verfahren zu dessen Herstellung.

In diesen Unterlagen betreffen Lagebezeichnungen, wie "oben", "unten", "vorne", "hinten", etc. stets eine in normaler Schusshaltung gehaltene Waffe, bei der die Seelenachse horizontal verläuft und die Schussabgabe nach vorne vom Schützen weg erfolgt.

### Stand der Technik

Waffengehäuse für eine Selbstlade-Feuerwaffe und damit ausgestattete Selbstlade-Feuerwaffen, beispielsweise ein Sturmgewehr, sind in unterschiedlichen Ausführungen bekannt. Waffengehäuse nehmen in ihrem Inneren unter anderem einen Lauf bzw. ein Rohr auf sowie eine längsbeweglich geführte Verschlussanordnung zur Schussabgabe, dem Ausziehen einer abgeschossenen Patronenhülse sowie zum Nachladen.

Der Funktionsablauf beim Schießen und Nachladen lässt sich vereinfacht wie folgt darstellen: Zur Schussabgabe führt die Verschlussanordnung, insbesondere deren Verschlusskopf, eine Patrone aus einer Patronenzuführvorrichtung in bekannter Weise in ein Patronenlager im Rohr ein. Bei Betätigung eines Abzugsmechanismus trifft ein Schlagbolzen auf den Patronenboden und zündet dort eine Treibladung, so dass ein Projektil aus der Patronenhülse durch das Rohr abgeschossen wird.

Die beim Abschussvorgang freiwerdenden Kräfte bzw. Gase werden genutzt, um die Verschlussanordnung in bekannter Weise in eine Rückwärtsbewegung zu versetzen. Bei einem Gasdrucklader bspw. treiben die abgeleiteten Schussgase über eine Gasabnahme und ein Gasgestänge die Verschlussanordnung mit hoher Geschwindigkeit nach hinten in Richtung Schaft. Am Verschlusskopf ist wenigstens ein Auszieher vorgesehen, der eine Patronenhülse an deren Rand am Hülsenboden umgreift und diese bei Rücklaufbewegung der Verschlussanordnung aus dem Patronenlager zieht. Eine Ausstoßvorrichtung stößt dann die Patronenhülse über ein Patronenauswurffenster aus dem Waffengehäuse. Beim Vorlauf der Verschlussanordnung wird wieder eine Patrone zugeführt und der Zyklus wiederholt sich.

Es ist bekannt, Waffengehäuse aus einem Block auszufräsen; dies ist aufwändig und kostenintensiv.

DE 103 92 631 B4 offenbart ein monolithisches Waffengehäuse (dort Schienenplattform genannt) für das amerikanische M16 Sturmgewehr, das aus einem Block gefräst und gebohrt ist. Das eingesetzte Rohr umfasste eine separate Laufverlängerung, die über das Waffengehäuse seitlich durchsetzende Schrauben und Klemmmuttern oder Stifte befestigt und geklemmt oder verstiftet wird, was zu Spannungen führt.

Auch sind Waffengehäuse aus vernieteten Waffengehäusebauteilen bekannt, bspw. beim FN MAG. Solche Nietverbindungen sind aufwändig und schwer tolerierbar.

Weitere bekannte Waffengehäuse sind aus Blechprägeteilen zusammengesetzt, bspw. bei den Maschinengewehren MG42/MG3, FN MINIMI, PKS Kalaschnikow und HK MG4. Zum Verbinden der Waffengehäuseteile sind großflächige Schweißungen erforderlich, wodurch ein Formverzug auftreten kann. Auch erfordern solche Blechprägeteile oft zusätzliche separate Stabilisierungselemente.

DE 10 2010 009 488 B3 der Anmelderin offenbart ein Waffengehäuse, das aus zwei Waffengehäusehalbschalen mit Positionierungsausnehmungen und einem Anschlussblock mit Anschlusszapfen zur Montage zusammengesetzt wird. Der Anschlussblock umfasst in seinem Inneren eine Rohraufnahme.

DE 93 04 489 U1 der Anmelderin offenbart ein Sturmgewehr mit einem Waffengehäuse, das als einstückiges Kunststoffhohlteil, insbesondere als Verbund-Spritzgusskörper, ausgebildet ist. Eine im Kunststoffhohlteil eingesetzte Metallbüchse nimmt mit ihrem vorderen Ende das hintere Ende eines Rohres auf. Zur Verriegelung geht ein Verschlusskopf mit im hinteren Ende der Metallbüchse vorgesehenen Verriegelungswarzen in Eingriff. Ein separater Handschutz ist nicht dargestellt und beschrieben.

DE 10 2015 013 803 der Anmelderin offenbart ein extrudiertes Leichtmetalladapter-Anbauteil für Zusatzeinrichtungen, das auf ein Waffengehäuse aufgesetzt werden kann, wie auch andere aus DE 10 2013 208 770 A1 oder US 6,694,660 bekannte Anbauteile. Diese Anbauteile umfassen keine Rohraufnahme.

Das Waffengehäuse des Sturmgewehrs FN SCAR der Firma FN Herstal ist als ein integrales Strangpressteil aus Leichtmetall ausgebildet. Als Rohraufnahme ist ein separater Stahleinsatz vorgesehen, der an den Seitenwänden des Waffengehäuses verschraubt wird. Die Verschraubung erwies sich hinsichtlich einer sicheren Lagerung und Festigkeit der Stahl-Rohraufnahme in der Praxis problematisch, so dass in den Waffengehäuseseitenwänden Verstärkungen für die Schrauben angebracht werden mussten.

US 2009/0000173 A1 offenbart ein Waffengehäuse gemäß dem Oberbegriff des Anspruchs 1.

US 2014/0076146 A1 offenbart ein Waffengehäuse mit einem inneren Gewindeabschnitt, der mit einem in etwa mittig einem Waffenrohr vorgesehenem Befestigungsabschnitt koppelbar ist.

### Aufgabe und Lösung der Erfindung

Aufgabe der vorliegenden Erfindung ist es, ein alternatives Waffengehäuse, das vorstehende Nachteile wenigstens teilweise überwindet sowie eine damit ausgestattete Selbstlade-Feuerwaffe bereit zu stellen.

Diese Aufgabe wird jeweils durch die Gegenstände der unabhängigen Ansprüche 1 und 10 und 15 gelöst.

Das gattungsbildende Waffengehäuse zeichnet sich gemäß Anspruch 1 dadurch aus, dassein Rohr oder eine am Rohr befestigte Verriegelungsbuchse über eine Rohrmutter in der Rohraufnahme festlegbar ist.

Die gattungsbildende Selbstlade-Feuerwaffe des Anspruchs 10 zeichnet sich dadurch aus, dass sie mit einem Waffengehäuse gemäß einem der Ansprüche 1 - 9 versehen ist.

Das Verfahren zur Herstellung eines Waffengehäuses und zum Zusammenbau einer Selbstlade-Feuerwaffe gemäß Anspruch 15 zeichnet sich durch ein Festlegen eines Rohres oder einer am Rohr befestigte Verriegelungsbuchse über eine Rohrmutter in der Rohraufnahme aus.

Das Waffengehäuse kann für verschiedenste Selbstladefeuerwaffen vorgesehen sein, bspw. für ein Maschinengewehr, Scharfschützengewehr oder ein Sturmgewehr. Das Waffengehäuse ist ausgelegt, um einen Verschluss längsbeweglich darin zu führen. Die Ausformung der Rohraufnahme im bzw. mit dem Waffengehäuse bedeutet, dass das Waffengehäuse und die Rohraufnahme als ein einziges Teil und aus dem gleichen Material einstückig oder integral ausgebildet bzw. ausgeformt sind.

Rohraufnahme im Sinne der Erfindung umfasst eine Rohrhalterung oder Rohrlager im Waffengehäuse. Das Waffengehäuse umfasst wenigstens einen Teil des Vorderschafts, die Rohraufnahme und wenigstens einen Teil des Hinterschafts.

Aufgrund der integralen oder einstückigen Ausbildung der Rohraufnahme als innerer Bestandteil des einstückigen Waffengehäuses sind vorteilhaft keine separate Befestigung der Rohraufnahme und/oder weiterer separater Zwischenteile im oder am Waffengehäuse erforderlich. Ebenso wenig müssen das Rohr und/oder die Rohraufnahme im Waffengehäuse etwa in den Seitenwänden verstiftet oder verschraubt werden. Dies ermöglicht eine spielfreie, verwindungssteife und direkte Lagerung und Befestigung des Rohres im Waffengehäuse. Ein Rohrwechsel lässt sich vorteilhaft über eine lösbare und wiederholgenaue Verbindung durchführen.

Das Waffengehäuse ist aufgrund der vergleichsweise einfachen und robusten Ausgestaltung wenig störanfällig, selbst bei starken mechanischen Belastungen von außen, sodass die mit diesem Waffengehäuse ausgestatteten Selbstlade-Feuerwaffen funktionssicher und zuverlässig sind.

Insgesamt vereinfacht die Ausbildung bzw. Ausformung der Rohraufnahme im Waffengehäuse dessen Herstellung, da kaum eine Nachbearbeitung erforderlich ist und ermöglicht eine integrale und stabile Bauweise. Auch lassen sich vorteilhaft eine Wärmeeinbringung in das Waffengehäuse und ein dadurch hervorgerufener etwaiger Verzug beim Verschweißen vermeiden, da solche Schweißarbeiten nicht erforderlich sind.

Erfindungsgemäß ist das Waffengehäuse durch Extrusion oder Strangpressen hergestellt.

Das Waffengehäuse kann aus geeigneten Materialien, bspw. Metalle und Leichtmetalle und deren Legierungen, Kunststoffe und Kunststoffverbundteile hergestellt sein. Bevorzugt ist das Waffengehäuse aus Aluminium oder einer Aluminiumlegierung hergestellt, (Anspruch 2).

Eine Ausbildung des Waffengehäuses als Aluminium-Strangpressprofil oder -Extrudierteil ermöglichte eine stabile, leichte und dauerhafte Ausführung des Waffengehäuses in Leichtmetallbauweise, führt zu einer Kostenreduktion bei dessen Herstellung und bringt aufgrund des vergleichsweise leichten Materials eine Gewichtsersparnis mit sich. Auch weisen Aluminium-Strangpressprofile oder Extrudierteile kaum Abmessungsschwankungen auf und reduzieren den Aufwand bei einer etwaigen Nachbearbeitung. Eine anschließende Nachbearbeitung mit leichter Ausfräsung nicht benötigter Innenstrukturen ist möglich und erfordert einen geringeren Aufwand im Vergleich zum zuvor beschrieben Ausfräsen eine Waffengehäuses aus einem Block.

Aufgrund der weitgehend vollständigen Ausgestaltung des Waffengehäuses beim Strangpressen bzw. Extrusion ist es auch kaum erforderlich, Zusatzteile am Waffengehäuse zu befestigen, etwa anzuschweißen. Somit lässt sich ein Schweißverzug bzw. eine Materialschwächung weitestgehend vermeiden. Ebenso lassen sich nachträgliche Formkorrekturen überwiegend vermeiden.

Insgesamt wird ein Waffengehäuse mit hoher Präzision und Maßgenauigkeit bei geringen Fertigungstoleranzen bereitgestellt, wobei das Herstellungsverfahren kostengünstig und zeiteffizient ist. Aufgrund der geringen Durchlaufzeit beim Nacharbeiten des Waffengehäuses lässt sich eine hohe Wirtschaftlichkeit erzielen. Ebenso lassen sich beliebige Design-Anforderungen an das Waffengehäuse verwirklichen.

Vorzugsweise erstreckt sich die Rohraufnahme in Längsrichtung des Waffengehäuses und weist in ihrem Inneren einen zylindrischen, koaxial zur Längsachse des Waffengehäuses verlaufenden Innenabschnitt zur Aufnahme und Lagerung des Rohres auf, (Anspruch 3).

Der Innenabschnitt zur Aufnahme und Lagerung des Rohres weist dabei komplementäre Abmessungen zum Rohr auf, so dass sich das Rohr spielfrei einsetzen lässt. Diese Maßnahme ermöglicht ein wiederholgenaues Einsetzen des Rohres in die Rohraufnahme. Vorzugsweise weist das Waffengehäuse in seinem Innenprofil wenigstens eine im Waffengehäuse ausgeformte bzw. ausgebildete Führungsschiene auf, (Anspruch 4). Diese kann zur Kontrolle des Steuerbolzens am Verschlussträger vorgesehen sein oder auch als Verschlussführungsschiene verwendet werden. Bevorzugt sind Führungsschienen beidseitig im Innenprofil ausgeformt. Verschlussführungsschienen ermöglichen eine sichere längsbewegliche Führung des Verschlusses über im Verschlussträger vorgesehene, zu den Führungsschienen komplementär ausgebildete Nuten oder Ausnehmungen. Die integrierten Verschlussführungsschienen können sich in etwa rechtwinklig in den Innenraum des Waffengehäuses erstrecken. Sie wirken auch als zusätzliche Stabilisierungselemente für das Waffengehäuse.

Bevorzugt ist die Rohraufnahme integral mit den Seitenwänden und/oder der Unterseite und/oder der Oberseite des Waffengehäuses ausgebildet ist, (Anspruch 5).

Diese Maßnahme erhöht die Stabilität des Waffengehäuses und ermöglicht eine sichere Aufnahme des Rohres im Waffengehäuse. Bei Schussabgabe auf die Rohraufnahme wirkende Kräfte lassen sich auch ins Waffengehäuse ableiten.

Bevorzugt verläuft zwischen Rohraufnahme und Unterseite des Waffengehäuses wenigstens ein Verbindungselement, (Anspruch 6).

Das Verbindungelement kann sich in Längsrichtung des Waffengehäuses ganz oder teilweise über die Länge und/oder die Breite der Rohraufnahme erstrecken. Das Verbindungselement lässt sich so mit konstruktiv einfachen Mitteln beim Strangpressen oder bei Extrusion in Förderrichtung ausformen. Diese Maßnahme erhöht ebenso die Stabilität des Waffengehäuses und ermöglicht eine sichere Aufnahme des Rohres im Waffengehäuse. Das Verbindungelement kann auch in Längsrichtung unterbrochen sein, beispielsweise durch Ausfräsungen.

Bevorzugt ist das Verbindungselement als wenigstens ein sich in Längsrichtung erstreckender Steg ausgebildet. Alternativ sind zwei Stege vorgesehen, zwischen denen ein Hohlraum ausgebildet ist, (Anspruch 7).

Ein oder mehrere Stege lassen sich konstruktiv einfach beim Strangpressen oder Extrusion ausbilden. Der Hohlraum lässt sich ebenso beim Strangpressen oder bei der Extrusion ausbilden oder nachträglich als Ausfräsung nachbearbeiten und bringt den Vorteil einer Gewichtsreduktion mit sich. Der oder die Stege erhöhen insgesamt die Stabilität des Waffengehäuses und der darin integrierten Rohraufnahme.

Vorzugsweise ist in der Rohraufnahme wenigstens eine Aussparung zur Positionierung eines Rohres vorgesehen, (Anspruch 8).

Die Aussparung in der Rohraufnahme lässt sich nachträglich als Ausfräsung ausbilden und ist in ihren Abmessungen komplementär zu einem Positionierelement am Rohr oder der Verriegelungsbuchse, etwa ein Positionierzapfen vorgesehen. Alternativ können auch ein Positionierelement an der Rohraufnahme und eine Aussparung am Rohr oder der Verriegelungsbuchse vorgesehen sein. Diese konstruktiv einfache Maßnahme ermöglicht eine wiederholgenaue Einsatz und Positionierung eines Rohres in der Rohraufhahme.

Bevorzugt umfasst das Waffengehäuse wenigstens eine Schnittstelle zur Kopplung mit einem Handschutz und/oder einem Griffstück und/oder einer Schulterstütze und/oder zur Montage einer Zusatzeinrichtung. Die eine oder mehre Schnittstelle(n) kann/können bei Extrusion oder beim Strangpressen im Waffengehäuse ausgeformt werden oder auch nachträglich mit dem Waffengehäuse gekoppelt werden, (Anspruch 9).

Eine oder mehrere Schnittstellen können in unterschiedlichen Ausgestaltungen bereitgestellt werden. Beispielsweise kann das Waffengehäuse an seiner Oberseite, Unterseite und/oder Seitenwänden wenigstens eine integral ausgebildete Picatinny-Schiene bzw. Aufnahmeschiene aufweisen, die sich ganz oder teilweise über die Länge des Waffengehäuses erstreckt. Eine durchgängige obere Picatinny-Schiene gestattet die stabile Anbringung auch von schweren und/oder hintereinandergeschalteten Optiken oder anderen Zusatzeinrichtungen, wie etwa Visiervorrichtungen, Taschenlampen etc. Eine durchgängige Picatinny-Schiene ermöglicht auch die Bereitstellung eines langen Waffengehäuses über der Rohraufnahme.

Alternativ oder zusätzlich können auch KeyMod Schnittstellen oder andere geeignete Öffnungen und/oder Durchbrüche im Waffengehäuse vorgesehen oder ausgebildet sein, an denen Zusatzeinrichtungen montierbar sind. Diese können bei Herstellung des Waffengehäuses etwa als Aussparungen oder auch über Nachbearbeitung bspw. über ein Fräsen oder Bohrungen bereitgestellt werden.

Bevorzugt ist bei der Selbstlade-Feuerwaffe in der Rohraufnahme des Waffengehäuses, ein sich koaxial zur Längsachse der Rohraufnahme erstreckendes Rohr befestigt, (Anspruch 11).

Bevorzugt ist am Rohr oder an einer auf das Rohr aufgesetzten und dort befestigten Verriegelungsbuchse der Selbstlade-Feuerwaffe ein Positionierelement vorgesehen, das komplementär zu einer Aussparung im Waffengehäuse, insbesondere in der Rohraufnahme, ausgebildet ist, (Anspruch 12).

Alternativ können das Positionierelement in oder an der Rohraufnahme und die Aussparung am Rohr oder an einer auf das Rohr aufgesetzten und dort befestigten Verriegelungsbuchse vorgesehen sein.

Beide Maßnahmen ermöglichen ein wiederholgenaues Einsetzen und Positionieren des Rohres in der Rohraufhahme.

Bevorzugt ist bei der Selbstlade-Feuerwaffe am Rohr oder an der Verriegelungsbuchse ein Anschlagselement für eine Positionierung und ein Festlegen des Rohres an der Rohraufnahme vorgesehen, (Anspruch 13).

Diese Maßnahme stellt mit konstruktiv einfachen Mitteln ein sichere und wiederholgenaue Positionierung, Aufnahme und Montage des Rohres in der Rohraufnahme sicher.

Bevorzugt weist bei der Selbstlade-Feuerwaffe das Rohr oder die Verriegelungsbuchse ein Befestigungsmittel zum Festlegen des Rohrs über ein weiteres Befestigungselement, insbesondere eine Rohrmutter, in oder an der Rohraufnahme auf, (Anspruch 14).

Das Rohr oder die Verriegelungsbuchse kann als Befestigungsmittel ein Gewinde und die Rohrmutter ein entsprechendes Gegengewinde zum Verschrauben und Verspannen des Rohres in der Rohraufnahme aufweisen. Eine solche Befestigung lässt sich beliebig oft lösen und erneuern. Auch können zusätzliche Sicherungselemente und Anschläge zum Festlegen vorgesehen sein.

Solche Maßnahmen stellen mit mechanisch einfachen Mitteln eine wirksame Rohraufhahme bereit, die das Rohr sicher innerhalb des Waffengehäuses lagert. Das Rohr lässt sich wiederhohlgenau in die Rohraufnahme einsetzen und über die Rohrmutter spannungsfrei in Bezug auf die Seitenwände des Waffengehäuses festlegen.

Vorzugsweise wird bei der Herstellung des Waffengehäuses wenigstens eine Führungsschiene im Waffengehäuse ausgeformt, die sich ganz oder teilweise über die Länge des Waffengehäuses erstreckt, (Anspruch 16).

Diese kann zur Kontrolle des Steuerbolzens am Verschlussträger vorgesehen sein oder auch als Verschlussführungsschiene verwendet werden. Bevorzugt sind zwei Führungsschienen beidseitig im Innenprofil des Waffengehäuses ausgeformt. Verschlussführungsschienen ermöglichen eine sichere längsbewegliche Führung des Verschlusses über im Verschlussträger vorgesehene, zu den Führungsschienen komplementär ausgebildete Nuten oder Ausnehmungen. Die integrierten Verschlussführungsschienen können sich in etwa rechtwinklig in den Innenraum des Waffengehäuses erstrecken und wirken auch als zusätzliche Stabilisierungselemente für das Waffengehäuse.

### Figurenbeschreibung

Ausführungsbeispiele der Erfindung sind im Folgenden unter Bezugnahme auf die beigefügten schematischen Zeichnungen näher erläutert. Darin zeigen:
- Fig. 1: eine Selbstlade-Feuerwaffe in einer Seitenansicht;
- Fig. 2: eine Explosions-Darstellung der Selbstlade-Feuerwaffe aus Fig. 1 in einer Seitenansicht;
- Fig. 3: eine Detail-Darstellung des Waffengehäuses der Selbstlade-Feuerwaffe aus Fig. 1 in einer Seitenansicht;
- Fig. 4: eine Querschnittsdarstellung des Waffengehäuses aus Fig. 3 in der Schnittebene A-A von hinten;
- Fig. 5: eine Querschnittsdarstellung des Waffengehäuses aus Fig. 3 in der Schnittebene B-B von hinten;
- Fig. 6: eine Querschnittsdarstellung des Waffengehäuses aus Fig. 3 in der Schnittebene C-C von hinten;
- Fig. 7: eine Querschnittsdarstellung des Waffengehäuses aus Fig. 3 in der Schnittebene D-D von vorne;
- Fig. 8: eine Querschnittsdarstellung des Waffengehäuses aus Fig. 3 in der Schnittebene E-E von vorne;
- Fig. 9: das Rohr aus der Selbstlade-Feuerwaffe aus Fig. 1 und 2 in einer Seitenansicht;
- Fig. 10: das Waffengehäuse aus Fig. 3 mit dem von vorne teilweise darin eingeschobenen Rohr aus Fig. 9 in einer Seitenansicht;
- Fig. 11: das Waffengehäuse aus Fig. 10 mit vollständig eingeschobenem Rohr in einer Seitenansicht mit einer Teillängsschnitt-Darstellung;
- Fig. 12: eine Detaildarstellung aus Fig. 11;
- Fig. 13a: eine Draufsicht auf eine Rohrmutter zur Festlegung des Rohrs von hinten;
- Fig. 13b: eine Längsschnitt-Darstellung der Rohrmutter aus Fig. 13a in einer Seitenansicht;
- Fig. 14: das Rohr aus Fig. 9-12 mit aufgesetzter Rohrmutter in einer Seitenansicht mit Teillängsschnitt-Darstellung;
- Fig. 15: das Waffengehäuse aus Fig. 10-12 mit an der Rohraufnahme montierten Rohr und aufgesetzter Rohrmutter in einer Seitenansicht mit einer Teilschnitt-Darstellung;
- Fig. 16: eine Detail-Darstellung aus Fig. 15;
- Fig. 17a: einen Verschlussträger mit Verschlusskopf in einer Seitenansicht;
- Fig. 17b: einen Draufsicht auf den Verschlussträger aus Fig. 17a mit Verschlusskopf;
- Fig. 18: eine Querschnittdarstellung des Waffengehäuses mit darin eingesetzten Verschlussträger;
- Fig. 19a: den Handschutz aus Fig. 1 und 2 in einer Seitenansicht;
- Fig. 19b: eine Ansicht auf den Handschutz aus Fig. 19a von vorne;
- Fig. 20: das Waffengehäuse aus Fig. 1 und 2 mit dem darauf montierte Handschutz aus Fig. 19a in einer Seitenansicht; und
- Fig. 21: die Selbstlade-Feuerwaffe aus Fig. 1 und 2 mit teilweise demontiertem Handschutz in einer Seitenansicht.

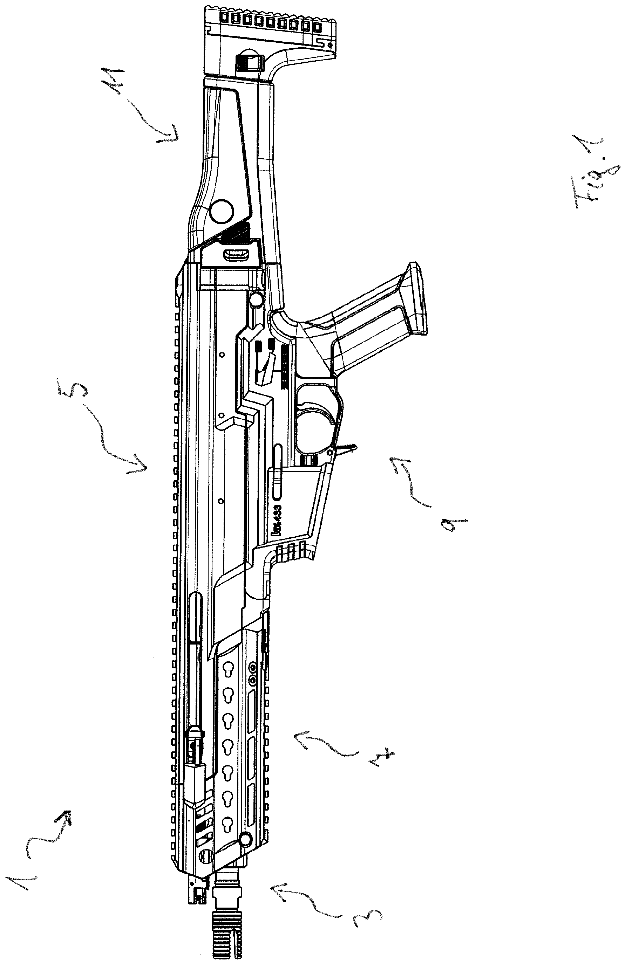

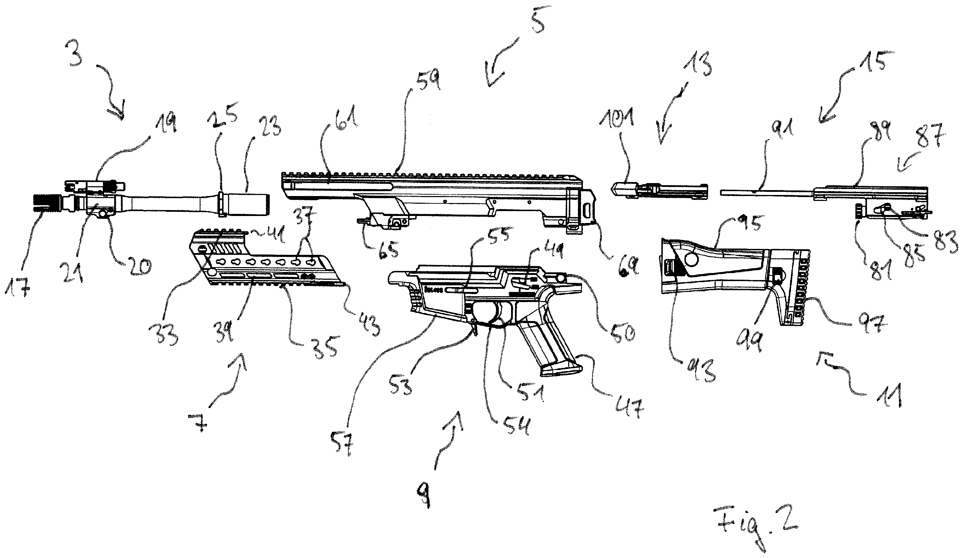

Der Aufbau einer erfindungsgemäßen Selbstlade-Feuerwaffe 1 wird zunächst anhand der Figuren 1 und 2 erläutert. Fig. 1 zeigt diese Selbstlade-Feuerwaffe 1 im montierten Zustand und Fig. 2 in einer Explosions-Darstellung.

Die Selbstlade-Feuerwaffe ist im vorliegenden Fall als Sturmgewehr (HK 433) ausgeführt und umfasst im Wesentlichen folgende Elemente: ein Waffengehäuse 5, ein darin einsetzbares Rohr 3, einen Handschutz 7, der mit dem Waffengehäuse 5 koppelbar ist, ein lösbar mit der Unterseite des Waffengehäuses 5 verbindbares Griffstück 9 sowie am hinteren Ende eine Schulterstütze 11. Zusätzlich sind in Fig. 2 eine Durchladeeinrichtung 13 und eine Verschlussanordnung 15 dargestellt.

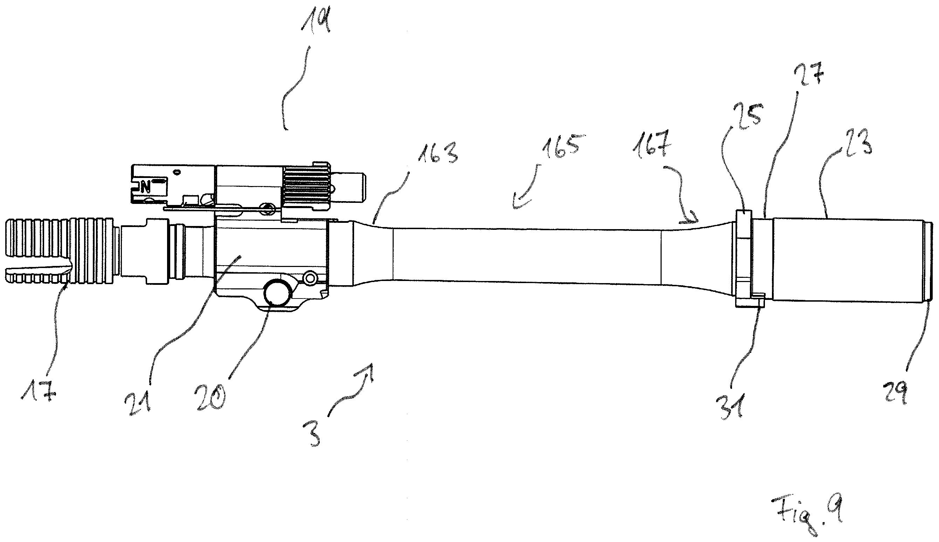

Das Rohr 3 umfasst an seinem vorderen Ende einen bekannten Mündungsfeuerdämpfer 17. Etwa im vorderen Drittel des Rohres 3 ist eine regulierbare Gasabnahme 19 über eine das Rohr 3 umgebende Haltevorrichtung bzw. Montagevorrichtung 21 angebracht (Vgl. auch Fig. 9-11, 14 und 15). Die Gasabnahme 19 zweigt über eine nicht gezeigte Gasbohrung im Rohr 3 nach Schussabgabe Gas ab, um den zuvor beschriebenen Nachlademechanismus anzutreiben. An der Unterseite der Montagevorrichtung 21 ist ein Querstiftlager 20 für die Befestigung eines Anbaugeräts, bspw. eines 40mm Granatwerfers vorgesehen.

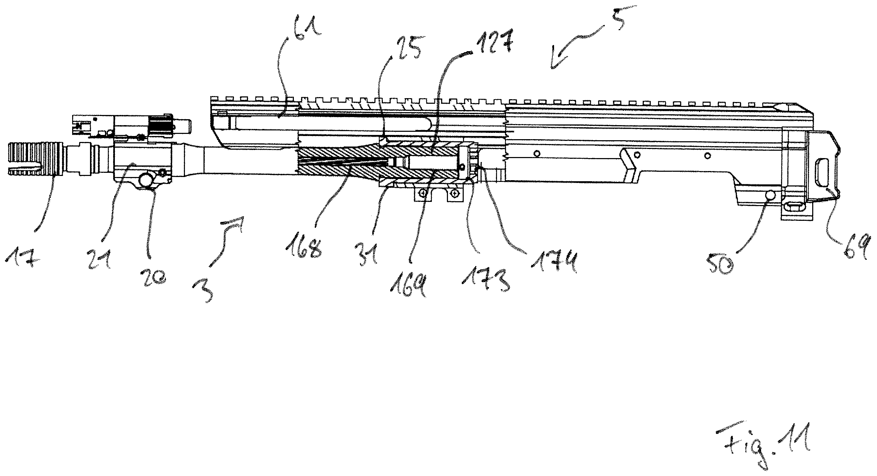

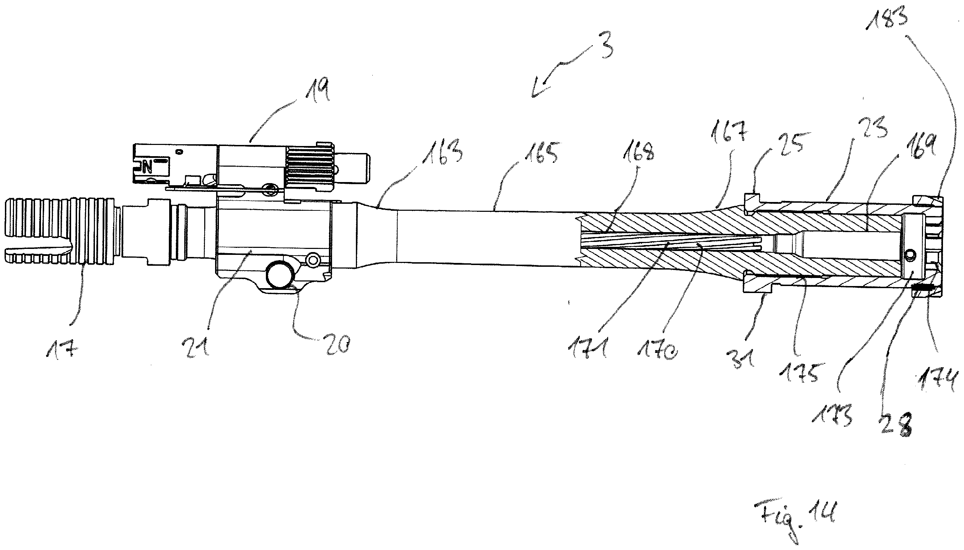

Nahe zur Montagevorrichtung 21 verjüngt sich das Rohr 3 über einen Verjüngungsabschnitt 163 (Fig. 9, 14)) zu seinem hinteren Ende. Ein daran angrenzender verjüngter Abschnitt 165 geht nach hinten in einen sich aufweitenden Abschnitt 167 über. Auf das hintere Ende des Rohres 3 ist eine Verriegelungsbuchse 23 aufgesetzt und über ein Gewinde 175 (vgl. Fig. 11, 12, 14-16) mit einem am Rohr 3 außen liegenden Gegengewindeabschnitt verschraubt. Im Bereich der Verriegelungsbuchse 23 ist innerhalb des Rohrs 3 ein Patronenlager 169 vorgesehen (vgl. Fig. 11, 12, 14-16).

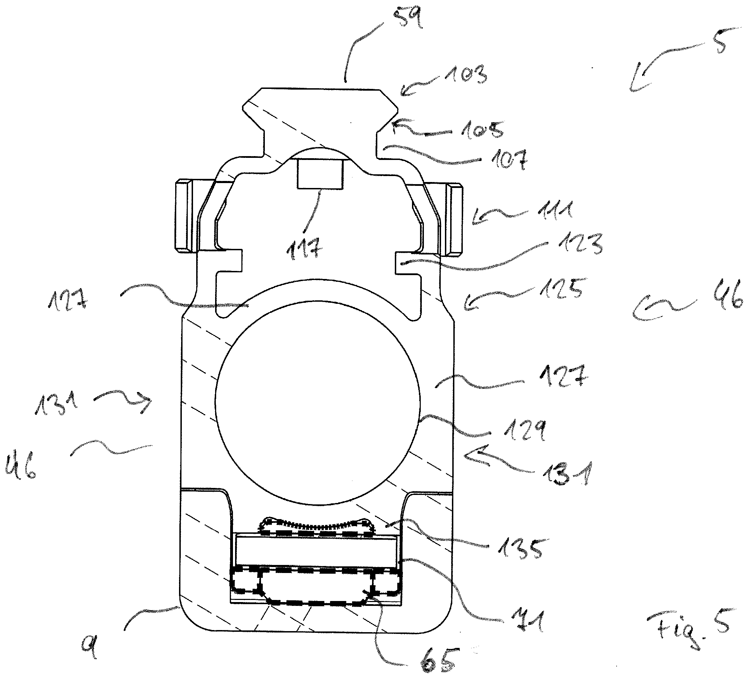

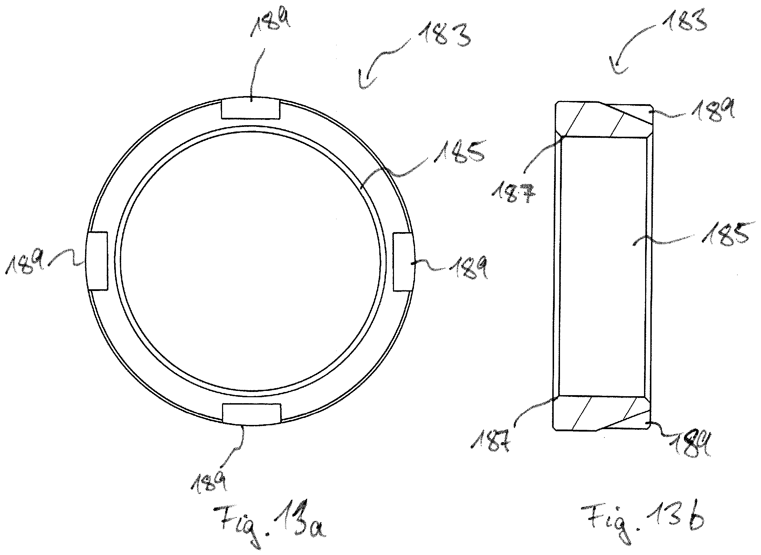

Am vorderen Ende der Verriegelungsbuchse 23 ist ein umlaufender ringförmiger Anschlag 25 integral ausgebildet, und weist an seiner Unterseite in etwa mittig einen sich in Längsrichtung nach hinten erstreckenden Positionierzapfen 31 auf. Dieser dient einer passgenauen Einführung und Montage des Rohrs 3 in eine Rohraufnahme bzw. Rohrlager 127 (vgl. Fig. 5, 11, 12 und 15-16). Angrenzend an den Anschlag 25 erstreckt sich eine fertigungstechnisch bedingte, die Verriegelungsbuchse 23 umlaufende Ausnehmung 27 (vgl. Fig. 9) nach hinten. Am hinteren Ende der Verriegelungsbuchse 23 befindet sich ein gestufter Verbindungsabschnitt 29 zum Aufsetzen und Festlegen einer Rohrmutter 183 (vgl. Fig. 13-16).

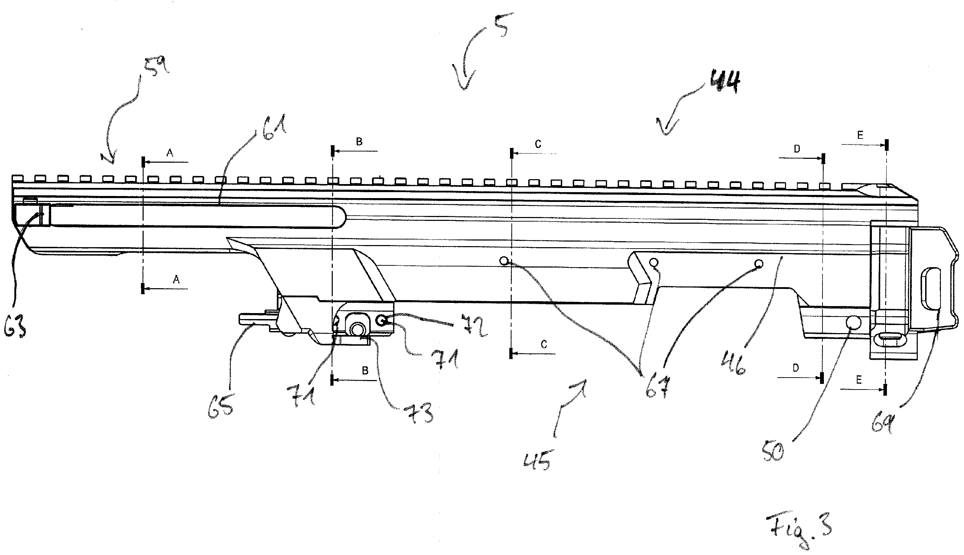

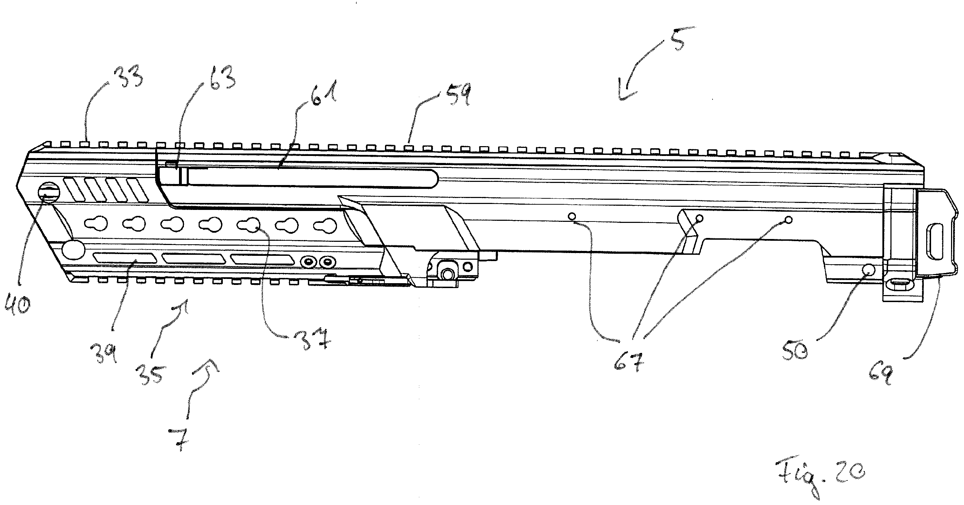

Das Waffengehäuse 5 ist als Aluminium-Extrudierteil hergestellt. An seiner Oberseite 44 ist eine sich in Längsrichtung erstreckende Picatinny-Schiene 59 einstückig ausgebildet (vgl. Fig. 3 und 10-12). Unterhalb der Picatinny-Schiene 59 ist in etwa im vorderen Drittel des Waffengehäuses 5 beidseitig ein sich in Längsrichtung erstreckender Längsschlitz 61 vorgesehen. Darin lässt sich ein wahlweise beidseitig bedienbarer Durchladehebel 101 der Durchladeeinrichtung 13 längsbeweglich führen und betätigen. Am vorderen Ende des Längsschlitzes 61 ist eine Verrastung 63 (vgl. Fig. 20) zur Befestigung des Durchladehebels 101 vorgesehen.

An seiner Unterseite 45 weist das vordere Ende des Waffengehäuses 5 eine zu den Abmessungen des Handschutzes 7 komplementäre, in etwa trapezförmige Außenkontur auf. Zusätzlich ist an der Unterseite des Waffengehäuses 5 eine koaxial zu dessen Längsrichtung vorstehende, in etwa zapfenartige Schnittstelle 65 zum wiederholgenauen Aufsetzen des Handschutzes 7 und zur Kopplung damit vorgesehen. Die Schnittstelle bzw. Handschutzaufnahme 65 ist als ein separates Einsatzteil bspw. aus Stahl vorgesehen und lässt sich mit einfachen Mitteln am Waffengehäuse 5 befestigen, etwa über Stifte oder Haltebolzen.

Am hinteren Ende der Schnittstelle 65 sind zwei Bohrungen 72 für die Aufnahme von gehäuseintegralen Querstiften 71 (Hohlspannstifte) vorgesehen, die zur Befestigung und Halterung des Einsatzteils bzw. der Handschutzaufnahme 65 am Waffengehäuse 5 dienen. Dazwischen ist ein Haltebolzen oder Aufnahmebolzen 73 zur Befestigung des Griffstücks 9 vorgesehen. Der Haltebolzen 73 kann gehäuseintegral vorgesehen sein. Zur Montage des Griffstücks 9 wird dieses von vorne auf den Haltebolzen aufgesetzt, angeklappt und hinten mit einem Querstift verstiftet. Die angrenzende Unterseite 45 des Waffengehäuses 5 ist in ihrer Außenkontur komplementär zur Oberseite des Griffstücks 9 ausgebildet.

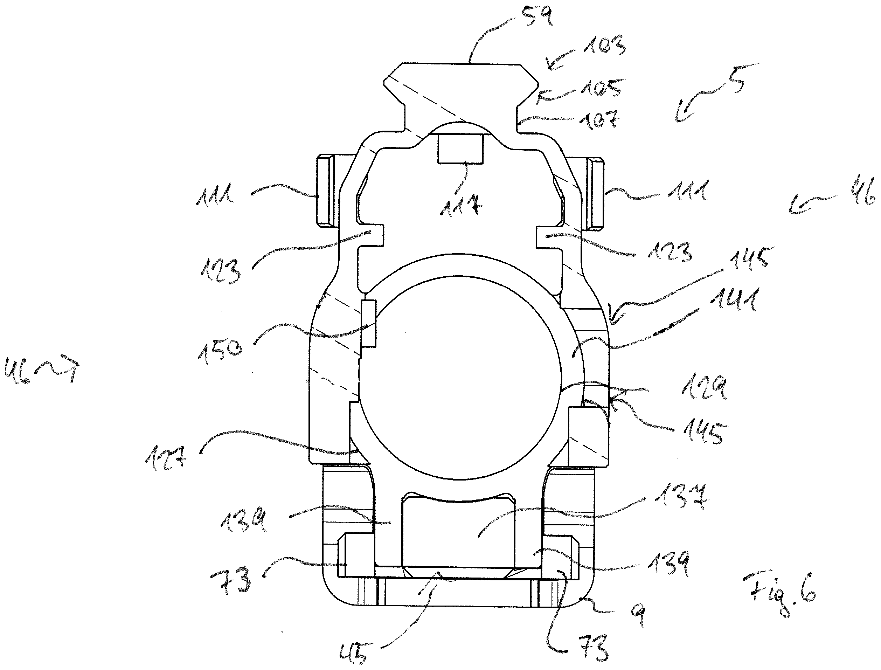

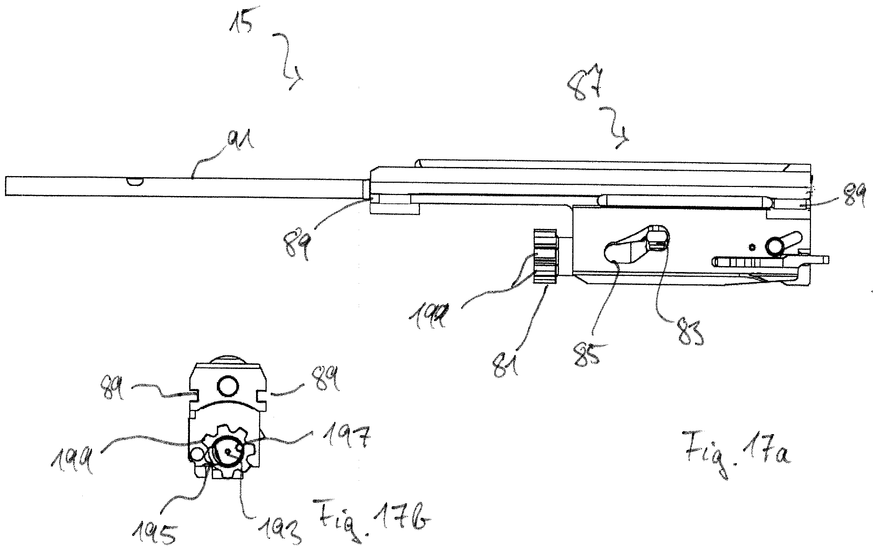

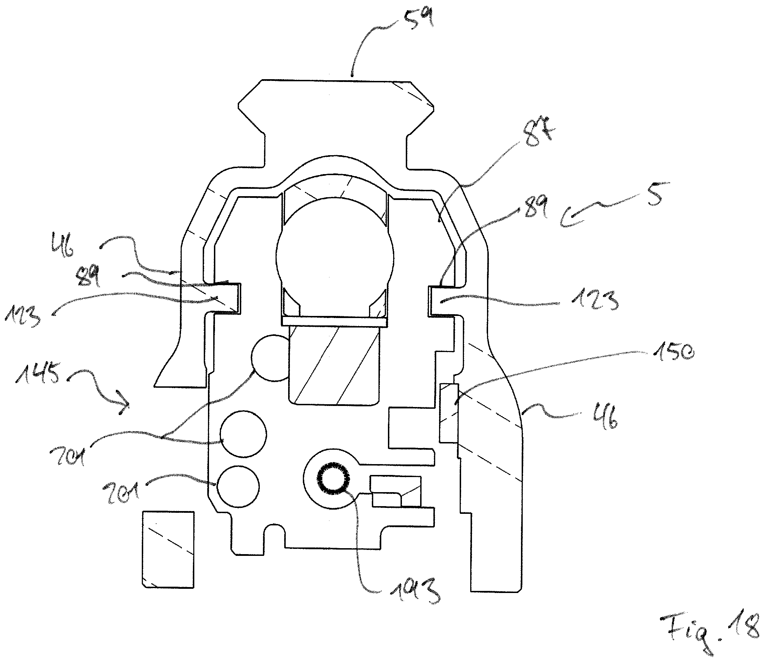

In der in Schussrichtung gesehen linken Seitenwand 46 des Waffengehäuses 5 sind in etwa mittig, in Längsrichtung versetzt drei Bohrungen 67 ausgebildet. Diese dienen der Aufnahme von Befestigungs-Schrauben zur lösbaren Montage einer Verschluss-Führungsschiene 150 (vgl. Fig. 6 und 18) an der Innenseite des Waffengehäuses 5. Die Verschluss-Führungsschiene 150 hält einen Steuerbolzen 83 eines Verschlusskopfes 81 (vgl. Fig. 2, 17a) in seiner entriegelten Position während eines Teils des Rück- und Vorlaufs der Verschlussanordnung 15, da sie eine Bewegung des Verschlusskopfes 81 nach oben und damit dessen Drehung blockiert. Am hinteren Ende des Waffengehäuses 5 ist eine Schulterstützen-Schnittstelle 69 zur Montage und/oder Verrastung der Schulterstütze 11 vorgesehen.

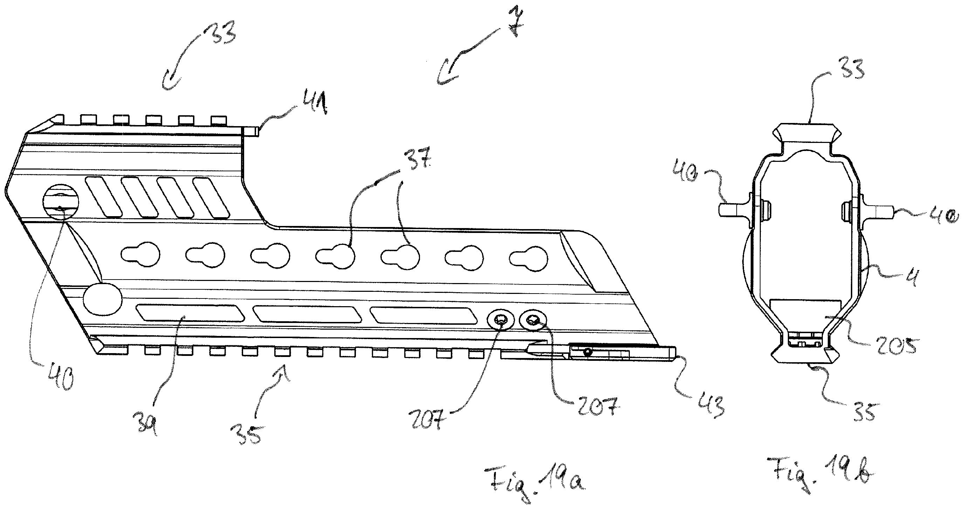

Der Handschutz 7 ist als Aluminium-Extrudierteil oder als Aluminium-Strangpressteil aus Aluminium oder einer Aluminiumlegierung vorgesehen und umfasst an seiner vorderen Oberseite eine einstückig ausgeformte Picatinny-Schiene 33, die im montierten Zustand die Picatinny-Schiene 59 des Waffengehäuses 5 verlängert (vgl. auch Fig. 2, 19a und b). Unterhalb der Picatinny-Schiene 33 sind nahe zur Vorderseite des Handschutzes Ösen 40 zur Befestigung eines Tragriemens beidseitig vorgesehen. Angrenzend an die obere Picatinny-Schiene 33 ist eine etwa zapfenartig vorstehende Schnittstelle 41 zur Befestigung am Waffengehäuse 5 vorgesehen, die bei Montage in eine komplementäre Gegenausbildung im Waffengehäuse 5 einführbar ist. Am hinteren Ende der Picatinny-Schiene 33 ist der Handschutz 7 nach unten ausgespart und weist eine zum vorderen Ende sowie zur vorderen Unterseite 45 des Waffengehäuses 5 komplementäre Außenkontur auf.

In etwa mittig des Handschutzes 7 sind in Längsrichtung mehrere schlüssellochartige sog. KeyMod-Öffhungen 37 zur Befestigung von Zusatzeinrichtungen, etwa Visiereinrichtungen vorgesehen. An dem hinteren unteren Ende des Handschutzes 7 ist eine weitere zapfenartig vorstehende Befestigungs-Schnittstelle 43 vorgesehen, die bei Montage in eine komplementäre Gegenausbildung im Waffengehäuse 5 einführbar ist. An der Unterseite des Handschutzes 7 ist eine weitere Picatinny-Schiene 35 einstückig ausgebildet. Darüber sind mehrere sich in Längsrichtung erstreckende Durchbrüche 39 u.a. zur Belüftung des Handschutzes 7 vorgesehen.

Das Griffstück 9 umfasst an seiner linken oberen Seite einen bekannten Feuerwahl- und Sicherungshebel 49 zum wahlweisen Umschalten zwischen Einzel- und Dauerfeuer und zur Sicherung. Das Griffstück 9 umfasst einen sich nach unten hinten erstreckenden Griff 47 sowie ein Abzugszüngel 51 innerhalb eines Abzugsbügels 54. An dessen vorderen Ende ist ein Magazin-Auslösehebel 53 zur Entnahme eines nicht gezeigten Magazins vorgesehen. Daran angrenzend befindet sich der Magazin-Schacht 57, in den ein (nicht gezeigtes) Magazin in bekannter Weise eingeführt und dort über einen Magazinhalter 55 festgelegt werden kann.

Die obere Außenkontur des Griffstücks 9 ist komplementär zur unteren Außenkontur des Waffengehäuses 5 ausgebildet. Am oberen hinteren Ende des Griffstücks 9 ist eine Bohrung 50 zu dessen Montage am Waffengehäuse 5 vorgesehen. An seinem oberen vorderen Ende lässt sich das Griffstück 9 über den Haltebolzen 73 am Waffengehäuse 5 montieren.

Der Verschluss 15 umfasst im Wesentlichen einen Verschlussträger 87, in dem ein Verschlusskopf 81 in bekannter Art und Weise längs- und drehbeweglich angeordnet ist (Vgl. auch Fig. 17a und b). Der Verschlusskopf 81 umfasst an seinem hinteren Ende einen Steuerbolzen 83, der in bekannter Weise in einer Steuerkurve 85 im Verschlussträger 87 zur Steuerung der Ver- und Entriegelung geführt ist. Der Verschlussträger 87 umfasst im oberen Bereich sich in Längsrichtung erstreckende beidseitige Ausnehmungen bzw. Nuten 89 (vgl. Fig. 17a und b) zum Eingriff mit im Waffengehäuse 5 integral ausgebildeten Führungsschienen 123. Am vorderen Ende der Verschlussträgers 87 (vgl. auch Fig. 17a und 17b) ist eine Verlängerungsstange 91 vorgesehen. Diese wird von einem Gaskolben (nicht gezeigt) in bekannter Weise beaufschlagt, wenn dieser nach Schussabgabe über das durch die Gasabnahme 19 entweichendes Gas nach hinten getrieben wird.

Die Schulterstütze 11 umfasst an ihrer Oberseite eine höhenverstellbare Wangenanlage 95 und an ihrer Vorderseite in etwa mittig eine Schnittstelle 93 zu deren Kopplung bzw. Verrastung mit der Waffengehäuseschnittstelle 69. Am hinteren Ende der Schulterstütze 11 ist eine Schaftkappe 97 vorgesehen, die innerhalb der Schulterstütze 11 gelagert ist und sich in Längsrichtung ausziehen und über eine Verrastung 99 festlegen lässt.

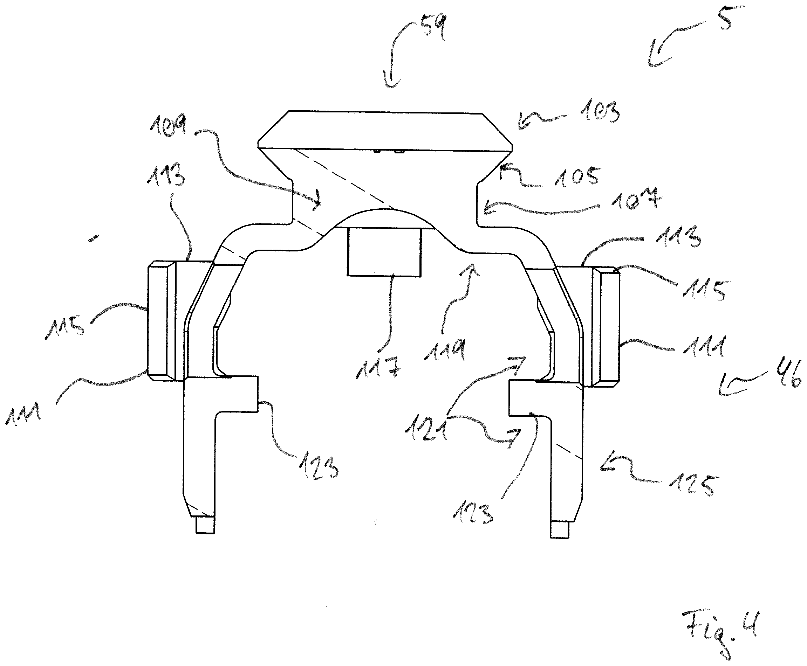

Fig. 3 zeigt fünf Schnittebenen des Waffengehäuses 5: A-A, B-B, C-C, D-D und E-E, die nun anhand der folgenden Figuren 4-8 erläutert werden.

Fig. 4 zeigt die Schnittebene A-A in einer Ansicht von hinten. An der Oberseite umfasst die Picatinny-Schiene 59 einen sich beidseitig keilförmig nach unten aufweitenden Abschnitt 103, der in einen keilförmigen sich beidseitig verjüngenden Abschnitt 105 übergeht. Daran schließt ein beidseitiger nahezu senkrecht nach unten verlaufender Abschnitt 107 an. Diese Geometrie erleichtert die Aufnahme und Befestigung von Zusatzeinrichtungen, beispielsweise Visierungen, Lampen oder sonstiges an der Picatinny-Schiene 59.

Angrenzend an den Abschnitt 107 weitet sich das Querschnittsprofil des Waffengehäuses 5 nach außen unten in einen in etwa wellenförmig verlaufenden Abschnitt 109 auf und geht in ein nahezu senkrecht nach unten verlaufenden Abschnitt 125 über. In etwa mittig zum Waffengehäuse 5 sind beidseitig an der Außenseite Verrastungen 111 für den Durchladehebel 101 der Durchladeeinrichtung 13 vorgesehen. Diese können mit dem Waffengehäuse 5 einstückig ausgeformt oder nachträglich montiert sein. Die Verrastungen 111 umfassen einen in etwa rechtwinklig vom Waffengehäuse 5 wegstehenden Abschnitt 113 und ein daran in etwa rechtwinklig angrenzenden sich nach hinten parallel zur Längsrichtung des Waffengehäuses 5 erstreckenden Abschnitt 115.

Im Inneren des Waffengehäuses 5 ist an der Oberseite ein sich in Längsrichtung erstreckender Stabilisierungs-Steg 117 vorgesehen, der sich nach hinten in etwa bis zum Ende der Rohraufnahme 127 erstreckt. An der Unterseite der Picatinny-Schiene 59 verbreitert sich die Innenkontur des Waffengehäuses 5 wellenförmig nach außen und unten. Der Wellenabschnitt 119 geht in einen Führungsabschnitt 121 über, bei dem in etwa mittig beidseitig Verschlussführungsschienen 123 integral mit dem Waffengehäuse 5 vorgesehen sind. Diese erstrecken sich zum Eingriff mit beidseitigen Führungsnuten 89 im Verschlussträger 87 in etwa rechtwinklig nach innen. Die beidseitigen Verschlussführungsschienen 123 werden bei der Extrusion oder beim Strangpressen über die gesamte Waffengehäuselänge ausgebildet. Sie werden aber nur für die Verschluss-Führung im hinteren Waffengehäusebereich in etwa ab Mitte des Waffengehäuses 5 bis zum hinteren Ende benötigt. Dieser Waffengehäuseabschnitt ist unten offen, da dort der Handschutz 7 montiert wird.

Fig. 5 zeigt die Schnittebene B-B von hinten. Im Abschnitt 125 des Waffengehäuses 5 ist die Rohraufnahme 127 ausgebildet in deren Innerem ein zylindrischer Hohlraum 129 ausgeformt ist. Die Seitenwände 46 des Waffengehäuses 5 verbreitern sich beidseitig an dem senkrechten Abschnitt 125 nach unten, um ein in die Rohraufnahme 127 eingesetztes Rohr 3 stabil und sicher in Position zu halten. Die verbreiterten bzw. verstärkten Abschnitte 131 verjüngen sich in etwa unterhalb des zylindrischen Hohlraums 129 nach unten und bilden so einen sich nach unten erstreckenden laschenartigen Zungenabschnitt 135. An dessen Unterseite ist in einer Bohrung der Querstift 71 für die Montage des Einsatzteils 65 zur Befestigung des Handschutzes 9 vorgesehen. Bei den oberhalb und unterhalb des Querstifts 71 gestrichelt dargestellten Bereichen handelt es sich um das eingesetzte Einsatzteil 65. Die Kontur des Griffstücks 9 umgibt den Zungenabschnitt 135 U-artig.

Fig. 6 zeigt die Schnittebene C-C. In etwa mittig vom Waffengehäuse 5 ist die Rückseite 141 der Rohraufnahme 127 gezeigt. Auf der rechten Seite ist ein Patronenauswurffenster 145 ausgebildet, durch das Patronenhülsen nach Schussabgabe in bekannter Weise ausgeworfen werden. An der Unterseite 45 ist der Haltebolzen 73 zur Halterung des Griffstücks 9 dargestellt. Zwischen zwei in etwa senkrecht zwischen Rohraufnahme 127 und Unterseite 45 des Waffengehäuses 5 verlaufenden Stegen 139 befindet sich im Inneren ein Hohlraum 137. Ebenso ist ein U-förmiger Teilabschnitt des Griffstücks 9 gezeigt, der die beiden Stege 139 umgibt und sich nach oben hin bis zur Unterseite der Seitenwände 46 des Waffengehäuses 5 erstreckt.

An der Innenseite der Seitenwand 46 ist die Stahlführungsschiene 150 dargestellt, die über die Bohrungen 67 in Längsrichtung am Waffengehäuse 5 verschraubt ist. Die Verschlussführungsschiene 150 dient der Kontrolle des Steuerbolzens 83 im Verschlussträger 87 und verhindert während eines Teiles des Vor- und Rücklaufes des Verschlussträgers eine Verdrehung des Verschlusskopfes 81 aus seiner entriegelten Position.

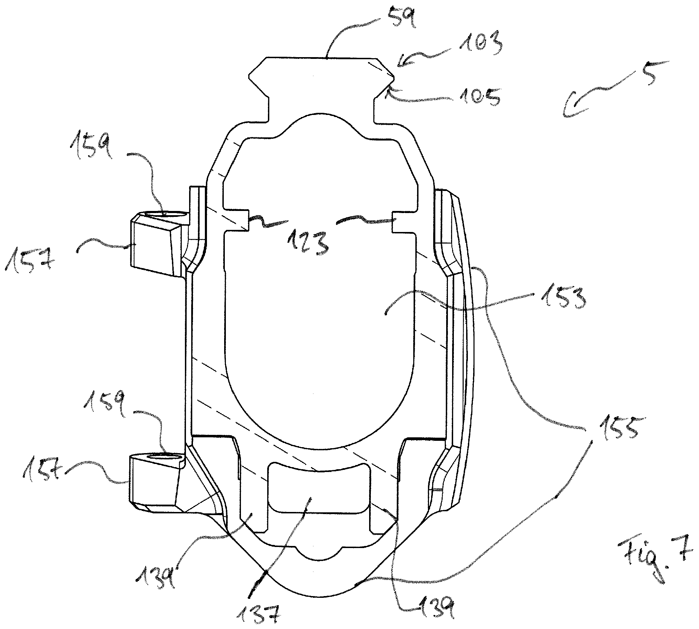

Fig. 7 zeigt eine Schnittdarstellung entlang der Schnittebene D-D von vorne. Der Hohlraum 137 setzt sich zwischen den Stegen 139 fort. Ein U-förmiges Scharnier- und Verriegelungsteil 155 umgreift das Waffengehäuse 5 von unten und ist dort am Waffengehäuse 5 befestigt, etwa angeschweißt. Das Scharnier- und Verriegelungsteil 155 umfasst auf der in Schussrichtung gesehen rechten Seite Scharnierabschnitte 157 mit Bohrungen 159 für einen komplementären Scharnierstift (nicht gezeigt), der sich von oben oder von unten einsetzen lässt. Das Innenprofil des Waffengehäuses 5 oberhalb der Stege 139 ist in etwa U-förmig ausgestaltet, erstreckt sich über die innenliegenden Verschlussführungsschienen 123 hinaus und begrenzt einen Hohlraum 153.

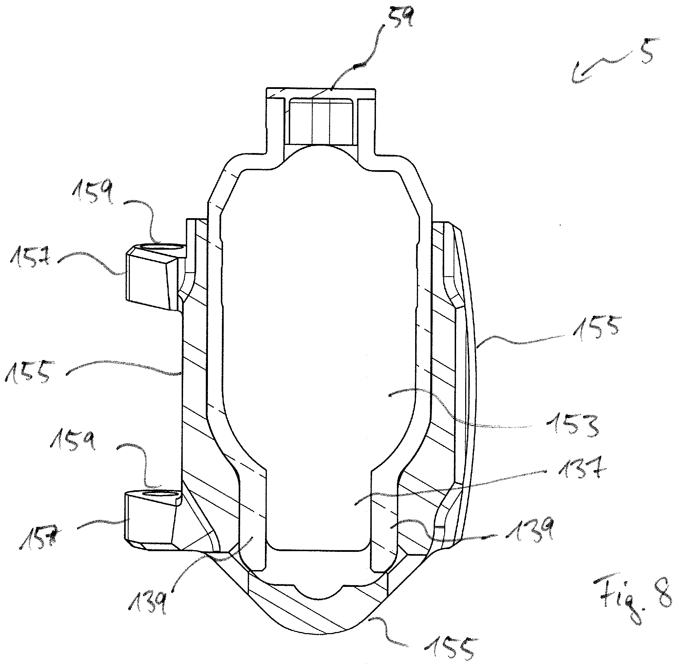

Fig. 8 zeigt die Schnittdarstellung entlang der Schnittebene E-E mit dem aufgesetztem in Scharnier- und Verriegelungsteil 155. Dieses umfasst an seiner hinteren Seite die Verriegelungsrast 69 zur Befestigung der Schulterstütze 11 (vgl. Fig. 1 und 2). An der Oberseite ist das hintere Ende der oben liegenden Picatinny-Schiene 59 gezeigt. Der Innenraum ist hier im Bereich des Hinterschafts vollständig ausgefräst, sodass die beiden Stege 139 nicht mehr über den unteren Abschnitt des U-förmigen Innenprofils miteinander verbunden sind, und der Hohlraum 137 mit dem Hohlraum 153 (vgl. Fig. 7) verbunden ist. Dies dient einem Einsatz eines Passstücks für ein Bodenteil (nicht gezeigt) mit Puffer und Schließfederhalterung (nicht gezeigt) in das hinter Ende des Waffengehäuses 5. Das Bodenteil lässt sich mit einem Stift aus der Bohrung 50 festlegen.

Fig. 9 zeigt das Rohr 3 in einer vergrößerten Darstellung mit an seinem hinteren Ende aufgesetzter Verriegelungsbuchse 23. Der umlaufende Anschlag 25 umfasst an seiner Unterseite den sich in Längsrichtung nach hinten erstreckenden Positionierzapfen 31. Anschlag 25 und Positionierzapfen 31 sind einstückig mit der Verriegelungsbuchse 23 ausgebildet.

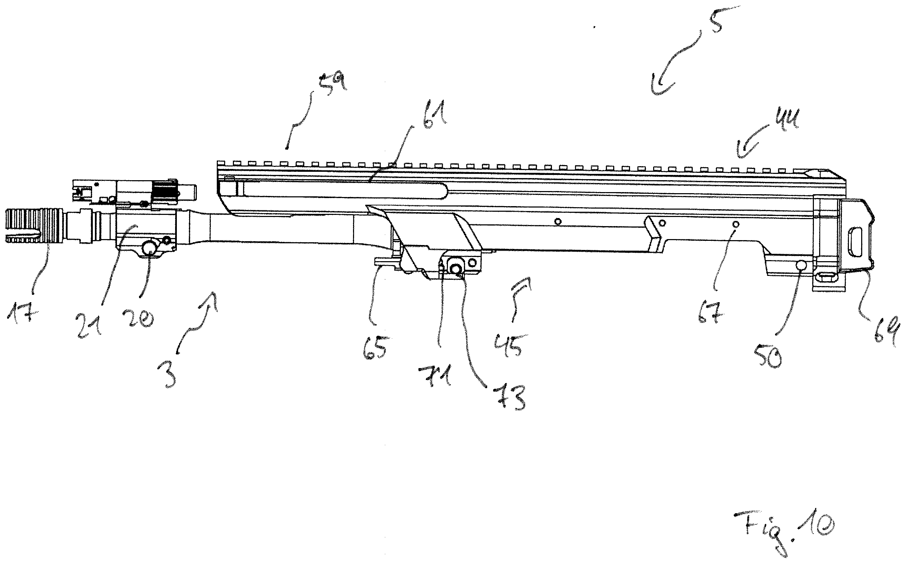

Fig. 10 zeigt das Rohr 3 teilweise von vorne in das Waffengehäuse 5 eingeschoben. Fig. 11 zeigt das bis zum Anschlag in das Waffengehäuse 5 eingeschobene Rohr 3. Dabei liegt der Anschlag 25 an der Vorderseite der Rohraufnahme 127 an und das hintere Ende des Rohres 3 mit seiner Verriegelungs-Buchse 23 steht über die Rohraufnahme 127 und deren zylindrischem Innenabschnitt 129 hinaus. Der Positionierungszapfen 31 geht mit einer nicht gezeigten Aussparung in der Rohraufnahme 127 in Eingriff und dient einer wiederholgenauen Einführung des Rohres 3 in die Rohraufnahme 127.

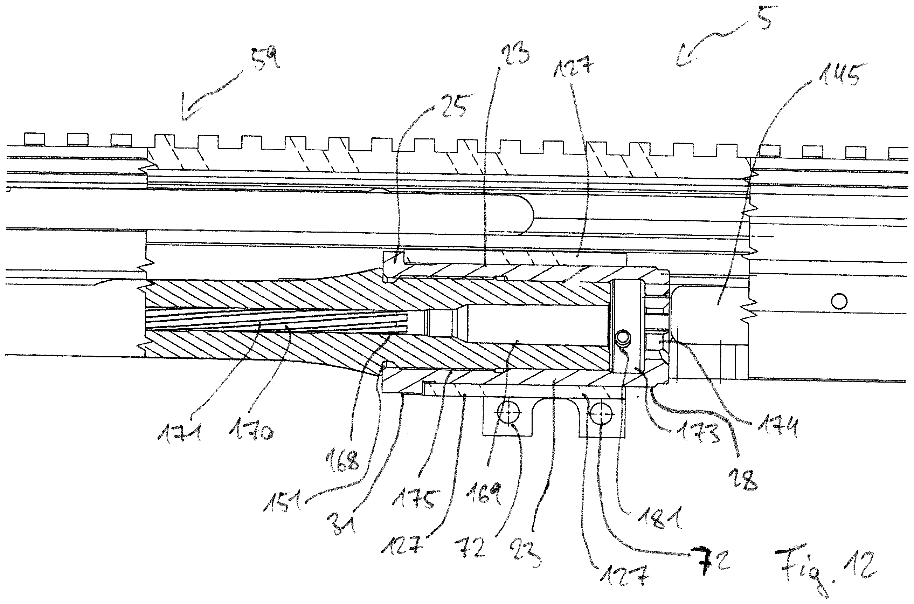

Im Teillängsschnitt der Fig. 11, der in Fig. 12 vergrößert dargestellt ist, sind an der Innenwandung 168 des Rohres 3 Züge 170 und Felder 171 gezeigt. Zwischen Patronenlager 169 und Verriegelungswarzen 174 der Verriegelungsbuchse 23 ist ein halbrunder Hohlraum 173 vorgesehen, in den die Verriegelungswarzen 199 des Verschlusskopfes 81 zum Verriegeln des Patronenlagers 169 eintauchen. Bei Verdrehung des Verschlusskopfes 81 durch die Führung des Steuerbolzen 83 in der Steuerkurve 85 werden die Verriegelungswarzen 199 innerhalb des Hohlraums 173 so verdreht, dass sie, die Verriegelungswarzen 174 der Verriegelungsbuchse 23 in bekannter Art und Weise an deren Vorderseite, also deren der Mündung zugewandten Seite des Patronenlagers 169 hinter stellen, um so die Selbstlade-Feuerwaffe 1 für eine Schussabgabe im verriegelten Zustand zu halten. Innerhalb des Hohlraums 173 ist ein Anschlagamboss 181 als Anschlag für einen am Verschlusskopf 81 vorgesehenen Auszieher 195 in der verriegelten Stellung vorgesehen (vgl. auch Fig. 17b). In der Darstellung in Fig. 11 ist keine Rohrmutter 183 auf die Verriegelungsbuchse 23 aufgesetzt und das Rohr 3 somit nicht festgelegt.

Die Detaildarstellung gem. Fig. 12 zeigt am vorderen Ende des Gewindes 175, mit dem die Verriegelungsbuchse 23 auf das Rohr 3 aufgeschraubt ist, eine fertigungstechnisch bedingte umlaufende Ausnehmung 151 am Rohr 3. Am hinteren Ende des Patronenlagers 169, angrenzend an die Verriegelungswarzen 174 ist das rechtsseitige Patronenauswurffenster 145 dargestellt. Oberhalb des Rohrs 3 erstreckt sich in Längsrichtung nach vorne die Aussparung 61 für die Längsbewegung des Durchladehebels 101. Der Stufenabschnitt 28 dient zum Aufsetzen und Anschlagen der Rohrmutter 183. Die Gewindeabschnitte 175 gehen an ihrem vorderen Ende in eine fertigungstechnisch bedingte umlaufende Nut über.

Fig. 13a zeigt eine Draufsicht auf die Rohrmutter 183. An deren Innenseite befindet sich ein Innengewinde 185. Um jeweils etwa 90° versetzt sind an deren Rückseite in etwa rechteckig ausgebildete Aussparungen 189 zum Ansetzen eines nicht gezeigten Spannstücks vorgesehen, um die Rohrmutter 183 an der Verriegelungsbuchse 23 zu verschrauben und verspannen. Der innere Abschnitt der Rohrmutter 183 ist in etwa zylindrisch ausgebildet und passgenau zum Aufsetzen auf die Verriegelungsbuchse 23 vorgesehen.

In der in Fig. 13b gezeigten Seitenansicht eines Längsschnitts durch die Rohrmutter 183 sind die oberen und unteren Aussparungen 189 für das Spannstück abgeschrägt dargestellt. Die seitlichen Kanten 187 sind jeweils angefast, um ein Aufsetzen der Rohrmutter 183 auf die Verriegelungsbuchse 23 zu erleichtern. Die Rohrmutter 183 dient zum Festlegen und Verspannen des eingeschobenen Rohrs 3 in der Rohraufnahme 127.

Fig. 14 zeigt das Rohr 3 in einer Seitenansicht in Teilschnitt-Darstellung mit auf den Gewindeabschnitt 28 der Verriegelungsbuchse 23 aufgeschraubter Rohrmutter 183 (ohne Rohraufnahme 127).

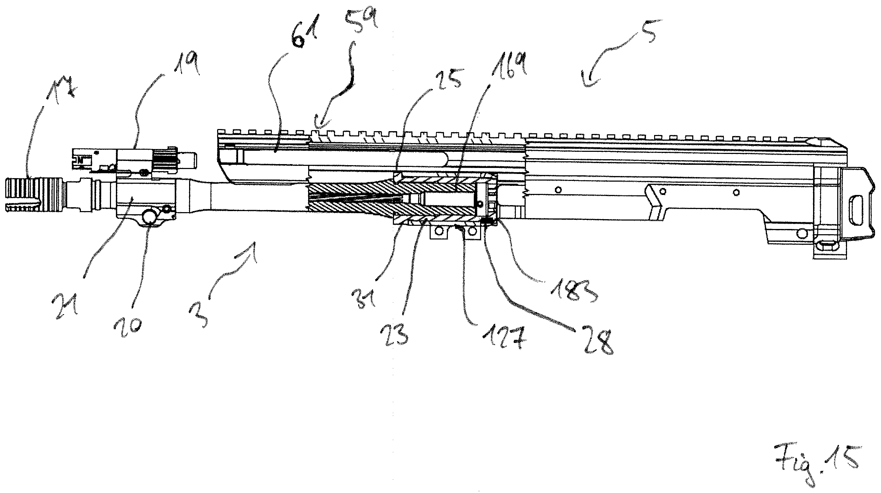

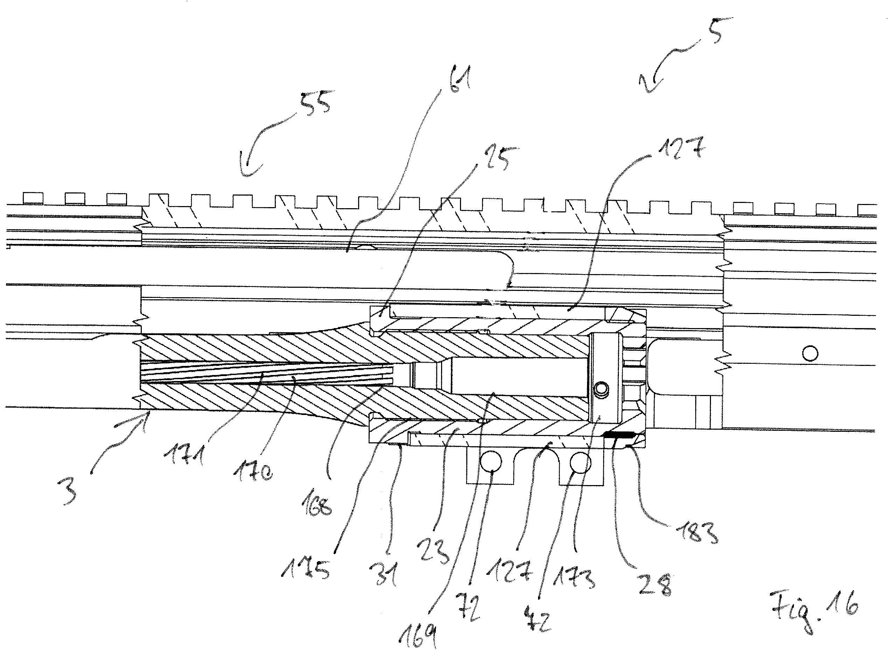

Fig. 15 und 16 zeigen das in die Rohraufnahme 127 eingesetzt Rohr 3 mit auf den Gewindeabschnitt 28 der Verriegelungsbuchse 23 aufgeschraubter Rohrmutter 183, die das Rohr 3 in der Rohraufnahme 127 in Längsrichtung festgelegt und dagegen verspannt.

Fig. 17a zeigt die Verschlussanordnung 15. Die Steuerkulisse 85 im Verschlussträger 87 ist rolltreppenartig ausgebildet und aus dem Sturmgewehr G36 der Anmelderin bekannt. Die beiden vorderen und hinteren sich parallel zueinander in Längsrichtung erstreckenden Abschnitte sind über zwei einander gegenüberliegende Seitenflanken miteinander verbunden, die unterschiedliche Neigungswinkel aufweisen, genauer die Entriegelungskante weist einen zur Längsrichtung flacheren Neigungswinkel auf als die gegenüberliegende steilere Verriegelungskante. Der Steuerbolzen 83 befindet sich in Fig. 17a in seiner hinteren Position und der Verschlusskopf 81 in seinem verriegelten Zustand.

Zum Entriegeln wird der Verschlussträger 87 nach Schussabgabe über das durch die Gasabnahme 19 abgezweigte, über den auf die Verlängerungsstange 91 wirkenden (nicht gezeigten) Gaskolben nach hinten getrieben. Dabei führt die Steuerkulisse den Steuerbolzen 83 und damit den Verschlusskopf 81 in dessen Entriegelungs-Stellung, in der dessen Verriegelungswarzen 199 fluchtend zwischen den Verriegelungswarzen 174 der Verriegelungsbuchse 23 hindurch nach hinten gleiten können. In diesem Zustand befindet sich der Steuerbolzen 83 in der vorderen unteren Ausnehmung der Steuerkurve 85, d. h. in seinem entriegelten Zustand, in dem sowohl Verschlussträger 87 als auch Verschlusskopf 81 sich gemeinsam nach hinten in Richtung Schulterstütze 11 bewegen. Beim Vorlauf in umgekehrter Richtung wird über den Verschlusskopf 81 eine Patrone aus dem nicht gezeigten Magazin zugeführt und in das Patronenlager 169 eingeführt.

In der in Fig. 17b gezeigten Draufsicht auf den Verschlusskopf 81 sind ein Ausstoßer 197 sowie der Auszieher 195 gezeigt. Mittig innerhalb des Verschlusskopfes 81 ist der Schlagbolzen 193 vorgesehen. An der Oberseite des Verschluss-Trägers 87 sind die beidseitigen Ausnehmungen 89 zum Eingriff mit den in den beiden Seitenwänden des Waffengehäuses 3 vorgesehenen Verschlussführungsschienen 123 gezeigt.

Fig. 18 zeigt eine Schnittdarstellung des in das Waffengehäuse 5 eingesetzten Verschlussträgers von vorne, der drei Bohrungen 201 aufweist, in die eine sog. Nachschlagmasse eingefüllt ist, um in bekannter Weise die Funktionsweise des Verschlusses sicherzustellen. Die beidseitigen Nuten 89 stehen in Eingriff mit den Verschlussführungsschienen 123 an den Seiteninnenwänden des Waffengehäuses 5.

Fig. 19a zeigt eine Seitenansicht des Handschutzes 7 mit seiner zum Waffengehäuse 5 komplementären Außenkontur. Fig. 19b zeigt eine Draufsicht auf den Handschutz 7 von vorne. An der Oberseite befindet sich die obere Picatinny-Schiene 33, an der Unterseite die untere Picatinny-Schiene 35. Der Handschutz 7 weist eine im Wesentlichen rechteckigen Innenquerschnitt bzw. Innenkontur auf. Links- und rechtsseitig sind die Ösen 40 zur Aufnahme eines Tragegurtes gezeigt. Oberhalb der unteren Picatinny-Schiene 35 befindet sich ein Einsatz 205 zur Aufnahme von jeweils beidseitigen Befestigungsschrauben 207 (vgl. Fig. 19a). Der Einsatz 205 kann als Stahleinsatz bereitgestellt sein und dient zur Stabilisierung oder als Rückhalt für die Befestigungsschrauben und dient auch als Gegenstück zur Handschutzaufhahme 65 zur Verrastung des Handschutzes 7.

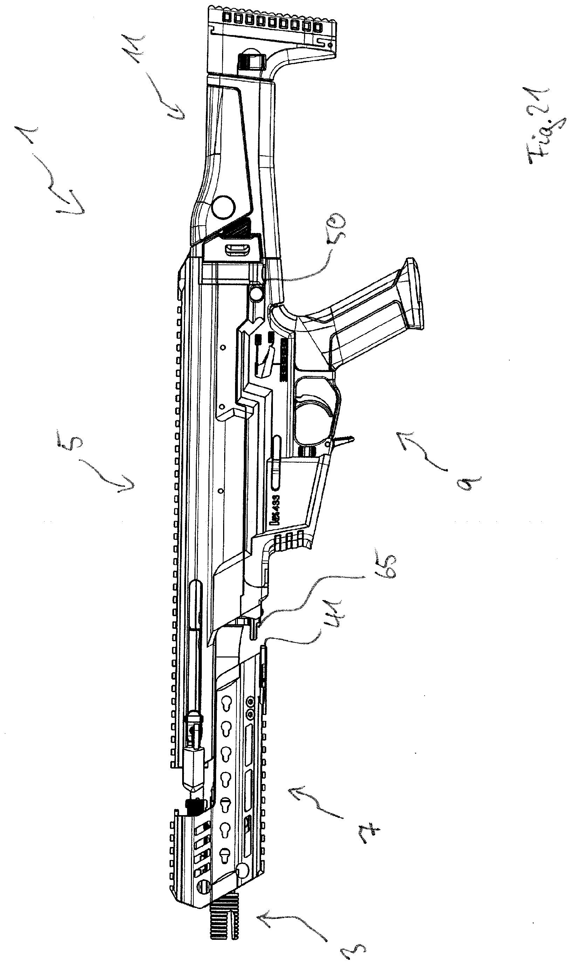

Fig. 20 zeigt den auf das Waffengehäuse 5 montierten Handschutz 7. Fig. 21 zeigt die Selbstlade-Feuerwaffe 1 mit aufgesetztem, aber teilweise demontiertem Handschutz 7.

Weitere Ausgestaltungen der Erfindung ergeben sich für den Fachmann aus den abhängigen Ansprüchen und den nachfolgenden Zeichnungen.

## Patentansprüche

1. Waffengehäuse (5) für eine Selbstlade-Feuerwaffe (1), welches mittels Extrusion oder Strangpressen hergestellt ist, umfassend eine Rohraufnahme (127), die als innerer Bestandteil des einstückigen Waffengehäuses (5) ausgeformt ist,
**dadurch gekennzeichnet, dass** die Rohraufnahme (127) eine Vorderseite zur Anlage eines Anschlags (25) eines Rohres (5) oder einer am Rohr befestigten Verriegelungsbuchse (23) und eine Rückseite (141) zur Anlage einer Rohrmutter (183) aufweist, so dass das Rohr (5) oder die am Rohr (5) befestigte Verriegelungsbuchse (23) mittels eines Gewindes über ein in der Rohrmutter (183) vorgesehenes Gegengewinde in der Rohraufnahme (127) festlegbar ist, derart dass die Rohrmutter (183) das Rohr oder die am Rohr (5) befestigte Verriegelungsbuchse (23) gegen die Rohraufnahme (127) verspannt.

2. Waffengehäuse (5) nach Anspruch 1, **dadurch gekennzeichnet, dass** es aus Aluminium oder einer Aluminiumlegierung hergestellt ist.

3. Waffengehäuse (5) nach einem der vorstehenden Ansprüche, **dadurch gekennzeichnet, dass** die Rohraufnahme (127) sich in Längsrichtung des Waffengehäuses (5) erstreckt und in ihrem Inneren eine zylindrischen, koaxial zur Längsachse des Waffengehäuses (5) verlaufenden Innenabschnitt (129) zur Aufnahme und Lagerung eines Rohres (3) aufweist.

4. Waffengehäuse (5) nach einem der vorstehenden Ansprüche, **dadurch gekennzeichnet, dass** sein Innenprofil wenigstens eine einstückig im Waffengehäuse (5) ausgeformte Führungsschiene (123) aufweist.

5. Waffengehäuse (5) nach einem der vorstehenden Ansprüche, **dadurch gekennzeichnet, dass** die Rohraufnahme (127) integral mit den Seitenwänden (46) und/oder Unterseite (45) und/oder der Oberseite (44) des Waffengehäuses (5) ausgebildet ist.

6. Waffengehäuse (5) nach einem der vorstehenden Ansprüche, **dadurch gekennzeichnet, dass** zwischen Rohraufnahme (127) und Unterseite (45) des Waffengehäuses (5) wenigstens ein Verbindungselement (139) (5) verläuft.

7. Waffengehäuse (5) nach Anspruch 6, **dadurch gekennzeichnet, dass** das Verbindungselement als wenigstens ein sich in Längsrichtung erstreckender Steg (139) im Waffengehäuse ausgebildet ist oder als zwei sich in Längsrichtung erstreckende Stege (139), zwischen denen ein Hohlraum (137) ausgebildet ist.

8. Waffengehäuse (5) nach einem der vorstehenden Ansprüche, **dadurch gekennzeichnet, dass** in der Rohraufnahme (127) wenigstens eine Aussparung zur Positionierung eines Rohres (3) vorgesehen ist.

9. Waffengehäuse (5) nach einem der vorstehenden Ansprüche, **dadurch gekennzeichnet, dass** wenigstens eine Schnittstelle (59, 65, 69, 71, 73) zur Kopplung mit einem Handschutz (7) und/oder einem Griffstück (9) und/oder einer Schulterstütze (11) und/oder zur Montage einer Zusatzeinrichtung einstückig daran oder darin ausgebildet ist.

10. Selbstlade-Feuerwaffe (1) mit einem Waffengehäuse (5) nach einem der vorstehenden Ansprüche 1 bis 9.

11. Selbstlade-Feuerwaffe (1) nach Anspruch 10 in dessen Waffengehäuse (5) in der Rohraufnahme (127) ein sich koaxial zur Längsachse der Rohraufnahme (127) erstreckendes Rohr (3) befestigt ist.

12. Selbstlade-Feuerwaffe (1) nach Anspruch 10 oder 11 **dadurch gekennzeichnet, dass** am Rohr (5) oder an einer auf das Rohr (5) aufgesetzten und dort befestigten Verriegelungsbuchse (23) ein Positionierelement (31) vorgesehen ist, das komplementär zu einer Aussparung in der Rohraufnahme (127) ausgebildet ist.

13. Selbstlade-Feuerwaffe (1) nach einem der Ansprüche 10 bis 12 **dadurch gekennzeichnet, dass** am Rohr (5) oder an der Verriegelungsbuchse (23) ein Anschlagselement (25) für eine Positionierung und ein Festlegen an der Rohraufnahme (127) vorgesehen ist.

14. Selbstlade-Feuerwaffe (1) nach einem der Ansprüche 10 bis 13 **dadurch gekennzeichnet, dass** das Rohr (5) oder die Verriegelungsbuchse (23) ein Befestigungsmittel (28) zum Festlegen des Rohrs (5) über die Rohrmutter (183) in der Rohraufnahme (127) aufweist.

15. Verfahren zur Herstellung eines Waffengehäuses (5) nach einem der Ansprüche 1 bis 9 und zum Zusammenbau einer Selbstlade-Feuerwaffe (1) umfassend die Schritte:
- Ausformen einer Rohraufnahme (127) als innerer Bestandteil des einstückigen Waffengehäuses (5), gekennzeichnet über den Schritt:
- Festlegen eines Rohres (5) oder einer am Rohr (5) befestigten Verriegelungsbuchse (23) mittels eines Gewindes über ein in einer Rohrmutter (183) vorgesehenes Gegengewinde in der Rohraufnahme (127), derart, dass die Rohrmutter (183) das das Rohr oder die am Rohr (5) befestigte Verriegelungsbuchse (23) gegen die Rohraufnahme (127) verspannt.

16. Verfahren nach Anspruch 15 **dadurch gekennzeichnet, dass** im Inneren des Waffengehäuses (5) Führungsschienen ausgeformt werden, die sich ganz oder teilweise über die Länge des Waffengehäuses (5) erstrecken.

## Claims

1. Weapon housing (5) for a self-loading firearm (1), which housing is produced by means of extrusion or extrusion moulding, comprising a barrel receptacle (127) which is formed as an inner component of the one-piece weapon housing (5), **characterised in that** the barrel receptacle (127) has a front face for contact with a stop (25) of a barrel (5) or a locking bush (23) fastened to the barrel and a rear face (141) for contact with a barrel nut (183) so that the barrel (5) or the locking bush (23) fastened to the barrel (5) can be fixed in the barrel receptacle (127) by means of a thread via a counter thread provided in the barrel nut (183), such that the barrel nut (183) braces the barrel or the locking bush (23) fastened to the barrel (5) against the barrel receptacle (127).

2. Weapon housing (5) according to claim 1, **characterised in that** it is made of aluminium or an aluminium alloy.

3. Weapon housing (5) according to either of the preceding claims, **characterised in that** the barrel receptacle (127) extends in the longitudinal direction of the weapon housing (5) and has, in the interior thereof, a cylindrical inner portion (129) extending coaxially to the longitudinal axis of the weapon housing (5) for receiving and storing a barrel (3).

4. Weapon housing (5) according to any of the preceding claims, **characterised in that** the inner profile thereof has at least one guide rail (123) formed in one piece in the weapon housing (5).

5. Weapon housing (5) according to any of the preceding claims, **characterised in that** the barrel receptacle (127) is formed integrally with the side walls (46) and/or the lower face (45) and/or the upper face (44) of the weapon housing (5).

6. Weapon housing (5) according to any of the preceding claims, **characterised in that** at least one connecting element (139) (5) extends between the barrel receptacle (127) and the lower face (45) of the weapon housing (5).

7. Weapon housing (5) according to claim 6, **characterised in that** the connecting element is designed as at least one bar (139) extending in the longitudinal direction in the weapon housing or as two bars (139) extending in the longitudinal direction, between which a cavity (137) is formed.

8. Weapon housing (5) according to any of the preceding claims, **characterised in that** at least one recess for positioning a barrel (3) is provided in the barrel receptacle (127).

9. Weapon housing (5) according to any of the preceding claims, **characterised in that** at least one interface (59, 65, 69, 71, 73) for coupling to a hand guard (7) and/or a grip (9) and/or a shoulder rest (11) and/or for mounting an attachment is formed integrally on or in said housing.

10. Self-loading firearm (1) having a weapon housing (5) according to any of the preceding claims 1 to 9.

11. Self-loading firearm (1) according to claim 10, in the weapon housing (5) of which a barrel (3) extending coaxially to the longitudinal axis of the barrel receptacle (127) is fastened in the barrel receptacle (127).

12. Self-loading firearm (1) according to either claim 10 or claim 11, **characterised in that** a positioning element (31), which is complementary to a recess in the barrel receptacle (127), is provided on the barrel (5) or on a locking bush (23) placed on the barrel (5) and fastened there.

13. Self-loading firearm (1) according to any of claims 10 to 12, **characterised in that** a stop element (25) is provided on the barrel (5) or on the locking bush (23) for positioning and fixing on the barrel receptacle (127).

14. Self-loading firearm (1) according to any of claims 10 to 13, **characterised in that** the barrel (5) or the locking bush (23) has a fastening means (28) for fixing the barrel (5) in the barrel receptacle (127) via the barrel nut (183).

15. Method for producing a weapon housing (5) according to any of claims 1 to 9 and for assembling a self-loading firearm (1), comprising the steps of:
- forming a barrel receptacle (127) as an inner component of the one-piece weapon housing (5), **characterised by** the step of:
- fixing a barrel (5) or a locking bush (23) fastened to the barrel (5) in the barrel receptacle (127) by means of a thread via a counter thread provided in a barrel nut (183), such that the barrel nut (183) braces the barrel or the locking bush (23) fastened to the barrel (5) against the barrel receptacle (127).

16. Method according to claim 15, **characterised in that** guide rails are formed in the interior of the weapon housing (5) which extend entirely or partially over the length of the weapon housing (5).

## Revendications

1. Carcasse d'arme (5) pour une arme à feu à chargement automatique (1), laquelle est fabriquée par extrusion ou filage, comprenant un logement de canon (127), qui est formé en tant que composant intérieur de la carcasse d'arme (5) d'un seul tenant,
**caractérisée en ce que**
le logement de canon (127) présente un côté avant pour appuyer une butée (25) d'un canon (5) ou une douille de verrouillage (23) fixée sur le canon et un côté arrière (141) pour appuyer un écrou de canon (183) de telle sorte que le canon (5) ou la douille de verrouillage (23) fixée sur le canon (5) puisse être bloqué ou bloquée dans le logement de canon (127) au moyen d'un filetage par l'intermédiaire d'un contre-filetage prévu dans l'écrou de canon (183) de telle manière que l'écrou de canon (183) serre le canon ou la douille de verrouillage (23) fixée sur le canon (5) contre le logement de canon (127).

2. Carcasse d'arme (5) selon la revendication 1, **caractérisée en ce qu'**elle est fabriquée à partir d'aluminium ou d'un alliage d'aluminium.

3. Carcasse d'arme (5) selon l'une quelconque des revendications précédentes, **caractérisée en ce que** le logement de canon (127) s'étend dans le sens longitudinal de la carcasse d'arme (5) et présente dans son intérieur une section intérieure (129) cylindrique s'étendant de manière coaxiale par rapport à l'axe longitudinal de la carcasse d'arme (5) pour loger et supporter un canon (3) .

4. Carcasse d'arme (5) selon l'une quelconque des revendications précédentes, **caractérisée en ce que** son profil intérieur présente au moins un rail de guidage (123) formé d'un seul tenant dans la carcasse d'arme (5) .

5. Carcasse d'arme (5) selon l'une quelconque des revendications précédentes, **caractérisée en ce que** le logement de canon (127) est réalisé intégralement avec les parois latérales (46) et/ou le côté inférieur (45) et/ou le côté supérieur (44) de la carcasse d'arme (5).

6. Carcasse d'arme (5) selon l'une quelconque des revendications précédentes, **caractérisée en ce qu'**au moins un élément de liaison (139) s'étend entre le logement de canon (127) et le côté inférieur (45) de la carcasse d'arme (5).

7. Carcasse d'arme (5) selon la revendication 6, **caractérisée en ce que** l'élément de liaison est réalisé en tant qu'une entretoise (139) s'étendant dans le sens longitudinal dans la carcasse d'arme ou en tant que deux entretoises (139) s'étendant dans le sens longitudinal, entre lesquelles est réalisé un espace creux (137).

8. Carcasse d'arme (5) selon l'une quelconque des revendications précédentes, **caractérisée en ce qu'**au moins un évidement pour positionner un canon (3) est prévu dans le logement de canon (127).

9. Carcasse d'arme (5) selon l'une quelconque des revendications précédentes, **caractérisée en ce qu'**au moins une interface (59, 65, 69, 71, 73) destinée à être couplée à une protection de main (7) et/ou à une pièce de préhension (9) et/ou à une crosse (11) et/ou pour le montage d'un équipement supplémentaire est réalisée sur ou dans celle-ci d'un seul tenant.

10. Arme à feu à chargement automatique (1) avec une carcasse d'arme (5) selon l'une quelconque des revendications 1 à 9.

11. Arme à feu à chargement automatique (1) selon la revendication 10, dans la carcasse d'arme (5) de laquelle est fixé un canon (3) s'étendant de manière coaxiale par rapport à l'axe longitudinal du logement de canon (127) dans le logement de canon (127).

12. Arme à feu à chargement automatique (1) selon la revendication 10 ou 11, **caractérisée en ce qu'**est prévu sur le canon (5) ou sur une douille de verrouillage (23) posée sur le canon (5) ou fixée à cet endroit, un élément de positionnement (31) qui est réalisé de manière complémentaire par rapport à un évidement dans le logement de canon (127).

13. Arme à feu à chargement automatique (1) selon l'une quelconque des revendications 10 à 12, **caractérisée en ce qu'**un élément de butée (25) pour un positionnement et un blocage sur le logement de canon (127) est prévu sur le canon (5) ou sur la douille de verrouillage (23).

14. Arme à feu à chargement automatique (1) selon l'une quelconque des revendications 10 à 13, **caractérisée en ce que** le canon (5) ou la douille de verrouillage (23) présente un moyen de fixation (28) pour bloquer le canon (5) par l'intermédiaire de l'écrou de canon (183) dans le logement de canon (127).

15. Procédé de fabrication d'une carcasse d'arme (5) selon l'une quelconque des revendications 1 à 9 et d'assemblage d'une arme à feu à chargement automatique (1), comprenant les étapes :
- de formation d'un logement de canon (127) en tant que composant intérieur de la carcasse d'arme (5) d'un seul tenant, **caractérisé par** l'étape :
- de blocage d'un canon (5) ou d'une douille de verrouillage (23) fixée sur le canon (5) au moyen d'un filetage par l'intermédiaire d'un contre-filetage prévu dans un écrou de canon (183) dans le logement de canon (127) de telle manière que l'écrou de canon (183) serre le canon ou la douille de verrouillage (23) fixée sur le canon (5) contre le logement de canon (127).

16. Procédé selon la revendication 15, **caractérisé en ce que** sont formés dans l'intérieur de la carcasse d'arme (5) des rails de guidage, qui s'étendent en totalité ou en partie sur la longueur de la carcasse d'arme (5).
